# EUROPEAN PATENT APPLICATION

(11) **EP 4 755 975 A1**
(43) Date of publication of application: **10.06.2026**
(21) Application number: 24848781.1
(22) Date of filing: 02.07.2024
(51) Int. Cl.: C09C 1/48

(54) **METHOD FOR PRODUCING CARBON BLACK AND REACTION FURNACE FOR PRODUCING CARBON BLACK**

(30) Priority: 02.08.2023 JP 2023126375
(71) Applicant: Tokai Carbon Co., Ltd., Minato-ku Tokyo 107-8636 (JP)
(72) Inventor: OSAMURA, Keisuke, Tokyo 107-8636 (JP); KURISU, Kengo, Tokyo 107-8636 (JP); KIRIYAMA, Daishi, Tokyo 107-8636 (JP)
(74) Representative: Müller-Boré & Partner Patentanwälte PartG mbB
(86) International application number: PCT/JP2024/023851
(87) International publication number: WO 2025/028122

(57) **Abstract**

A method for producing carbon black using a reaction furnace for producing carbon black comprising a fuel combustion zone, a primary raw material introduction zone, a heating zone, and a secondary raw material introduction zone that are sequentially provided from an upstream direction toward a downstream direction of a gas flow path, the method comprising:
introducing oxygen-containing gas and fuel into the fuel combustion zone, mixing and combusting the oxygen-containing gas and the fuel to generate a fuel combustion gas flow, introducing a hydrocarbon that is a primary raw material while the fuel combustion gas flow is introduced into the primary raw material introduction zone to form a primary reaction product-containing gas, and electrically heating the primary reaction product-containing gas in the heating zone; and
introducing a hydrocarbon that is a secondary raw material while the primary reaction product-containing gas electrically heated is introduced into the secondary raw material introduction zone, to perform secondary reaction,
in order to provide a method for producing carbon black which has desired characteristics at a high yield while carbon dioxide (CO₂) emissions are reduced in the furnace method using a raw material hydrocarbon as a secondary raw material.

## Description

### Technical Field

The present invention relates to a method for producing carbon black and a reaction furnace for producing carbon black.

### Background Art

As a method for producing carbon black, a furnace method, an acetylene black method, a channel method, and the like are generally known. Among them, the furnace method is known as a production method that enables mass production of carbon black and is excellent in economy.

The above-described furnace method is known as a method for producing carbon black by pyrolyzing liquid feedstock oil such as heavy oil as a raw material hydrocarbon or natural gas as a raw material in a fire-resistant furnace where oxygen is deficient.

Specifically, for example, as described in, for example, Patent Literature 1, Patent Literature 2, and the like, a method for producing carbon black using a reaction furnace is known, the reaction furnace typically including, inside thereof, a fuel combustion zone configured to generate a combustion gas flow, a reaction zone configured to introduce liquid feedstock oil or natural gas as a raw material hydrocarbon into the combustion gas flow obtained in the fuel combustion zone to convert this into carbon black by pyrolytic reaction, and a reaction stop zone configured to rapidly cool the reaction gas obtained in the reaction zone to stop the reaction.

In addition, there are various types of carbon blacks for reinforcing rubber depending on its distinctive characteristics. Since the distinctive characteristics are a main factor that determines various performances of the rubber, carbon black having characteristics suitable for member applications has been selected to be blended into a rubber composition.

For example, as carbon black to be blended into a rubber composition for tire treads, which improves durability such as wear resistance and can further reduce rolling resistance, those satisfying various characteristics such as a dibutylphthalate (DBP) absorption amount of 40 to 180 mL/100 g, a nitrogen adsorption specific surface area (N₂SA) of 40 to 300 m²/g, and a toluene coloring transmittance (LT) of 90% or more have been proposed (Patent Literature 3 and the like).

### Citation List

### Patent Literature

Patent Literature 1: Japanese Patent Laid-Open No. 2004-43598
Patent Literature 2: Japanese Patent Laid-Open No. 2004-277443
Patent Literature 3: Japanese Patent Laid-Open No. 2011-026392

### Summary of Invention

### Technical Problem

As the above carbon black to be blended into the rubber composition for tire treads, one having a dibutylphthalate (DBP) absorption amount of 40 to 180 mL/100 g, a nitrogen adsorption specific surface area of (N₂SA) of 40 to 190 m²/g, and a toluene coloring transmittance (LT) of 90% or more has been required.

As described above, as a method for producing carbon black, a furnace method, an acetylene black method, a channel method, and the like are generally known. Among them, the furnace method is known as a production method that enables mass production of carbon black and is excellent in economy.

The above-described furnace method is known as a method for producing carbon black by pyrolyzing liquid feedstock oil such as heavy oil as a raw material hydrocarbon or natural gas as a raw material in a fire-resistant furnace where oxygen is deficient.

Meanwhile, with recent increases in awareness of environmental issues, various production industries are seeking methods for producing various products having reduced carbon dioxide (CO₂) emissions, and a production method that reduces carbon dioxide (CO₂) emissions has been required even in the furnace method that uses the above-described hydrocarbon as a raw material.

However, the studies performed by the present inventors revealed that when an amount of fuel supplied to the fuel combustion zone is restricted to reduce carbon dioxide (CO₂) emissions in the above-described furnace method, the obtained combustion gas flow fails to be raised to a desired temperature, and target carbon black cannot be produced at a high yield.

Under such a circumstance, an object of the present invention is to provide a method for producing carbon black which has desired characteristics at a high yield while carbon dioxide (CO₂) emissions are reduced in the furnace method, and a reaction furnace for producing carbon black.

### Solution to Problem

As a result of intensive studies to solve the above-described technical problems, the present inventors found that the above-described technical problems can be solved by a method for producing carbon black using a reaction furnace for producing carbon black comprising a fuel combustion zone, a primary raw material introduction zone, a heating zone, and a secondary raw material introduction zone that are sequentially provided from an upstream direction toward a downstream direction of a gas flow path, the method comprising:
introducing oxygen-containing gas and fuel into the fuel combustion zone, mixing and combusting the oxygen-containing gas and the fuel to generate a fuel combustion gas flow, introducing a hydrocarbon that is a primary raw material while the fuel combustion gas flow is introduced into the primary raw material introduction zone to form a primary reaction product-containing gas, and electrically heating the primary reaction product-containing gas in the heating zone; and
introducing a hydrocarbon that is a secondary raw material while the primary reaction product-containing gas electrically heated is introduced into the secondary raw material introduction zone, to perform secondary reaction, and completed the present invention based on the present findings.

That is, the present invention is to provide:
(1) A method for producing carbon black using a reaction furnace for producing carbon black comprising a fuel combustion zone, a primary raw material introduction zone, a heating zone, and a secondary raw material introduction zone that are sequentially provided from an upstream direction toward a downstream direction of a gas flow path, the method comprising:
   introducing oxygen-containing gas and fuel into the fuel combustion zone, mixing and combusting the oxygen-containing gas and the fuel to generate a fuel combustion gas flow, introducing a hydrocarbon that is a primary raw material while the fuel combustion gas flow is introduced into the primary raw material introduction zone to form a primary reaction product-containing gas, and electrically heating the primary reaction product-containing gas in the heating zone; and
   introducing a hydrocarbon that is a secondary raw material while the primary reaction product-containing gas electrically heated is introduced into the secondary raw material introduction zone, to perform secondary reaction;
(2) The method for producing carbon black according to (1), wherein carbon black having a dibutylphthalate (DBP) absorption amount of 40 to 180 mL/100 g, a nitrogen adsorption specific surface area (N₂SA) of 40 to 190 m²/g, and a toluene coloring transmittance (LT) of 90% or more is obtained; and
(3) A reaction furnace for producing carbon black comprising a fuel combustion zone, a primary raw material introduction zone, a heating zone, and a secondary raw material introduction zone that are sequentially provided from an upstream direction toward a downstream direction of a gas flow path,
   wherein the fuel combustion zone is a region where oxygen-containing gas and fuel are introduced, mixed, and combusted, to generate a fuel combustion gas flow,
   the primary raw material introduction zone is a region where a hydrocarbon that is a primary raw material is introduced while the fuel combustion gas flow is introduced to form a primary reaction product-containing gas,
   the heating zone is a region where the primary reaction product-containing gas is electrically heated, and
   the secondary raw material introduction zone is a region where a hydrocarbon that is a secondary raw material is introduced while the primary reaction product-containing gas electrically heated is introduced, to perform secondary reaction.

### Advantageous Effects of Invention

According to the present invention, it is believed that, using a reaction furnace for producing carbon black comprising a fuel combustion zone, a primary raw material introduction zone, a heating zone, and a secondary raw material introduction zone that are sequentially provided from an upstream direction toward a downstream direction of a gas flow path, when a hydrocarbon that is a primary raw material is introduced into the above-described primary raw material introduction zone, a part thereof is pyrolyzed to form a primary reaction product (carbon black nucleus) that is a precursor, and the formed primary reaction product-containing gas is electrically heated in the above-described heating zone, then the remainder of the primary raw material is pyrolyzed while carbon dioxide (CO₂) emissions are reduced, then gas sufficiently containing the primary reaction product (carbon black nucleus) that is the precursor can be suitably formed. In addition, it is believed that, in the above-described secondary raw material introduction zone, when a hydrocarbon that is a secondary raw material is introduced while the above-described primary reaction product-containing gas is introduced, a pyrolyzed product of this secondary raw material forms a primary particle obtained by growing a particle diameter of the primary reaction product (carbon black nucleus), and secondary reaction occurs, in which an aggregate of a chain-like structure obtained by linking a plurality of the primary particles in the form of a rosary is formed, and therefore carbon black having desired characteristics can be easily and continuously produced at a high yield.

Therefore, the present invention can provide a method for producing carbon black having desired characteristics at a high yield while carbon dioxide (CO₂) emissions are reduced in a furnace method using a primary raw material and a secondary raw material as raw material hydrocarbons, and a reaction furnace for producing carbon black that can be suitably used in the above-described method.

### Brief Description of Drawings

[Figure 1] Figure 1 shows, in an embodiment of a reaction furnace for producing carbon black, a schematic view showing its cross section.
[Figure 2] Figure 2 shows, in an embodiment of a reaction furnace for producing carbon black that has been conventionally used, a schematic view of its cross section.

### Description of Embodiments

First, a method for producing carbon black according to the present invention will be described.

The method for producing carbon black according to the present invention uses a reaction furnace for producing carbon black comprising a fuel combustion zone, a primary raw material introduction zone, a heating zone, and a secondary raw material introduction zone that are sequentially provided from an upstream direction toward a downstream direction of a gas flow path, the method comprises:
introducing oxygen-containing gas and fuel into the fuel combustion zone, mixing and combusting the oxygen-containing gas and the fuel to generate a fuel combustion gas flow, introducing a hydrocarbon that is a primary raw material while the fuel combustion gas flow is introduced into the primary raw material introduction zone to form a primary reaction product-containing gas, and electrically heating the primary reaction product-containing gas in the heating zone; and
introducing a hydrocarbon that is a secondary raw material while the primary reaction product-containing gas electrically heated is introduced into the secondary raw material introduction zone, to perform secondary reaction.

In the method for producing carbon black according to the present invention, a reaction furnace for producing carbon black, which comprises a fuel combustion zone, a primary raw material introduction zone, a heating zone, and a secondary raw material introduction zone that are sequentially provided from an upstream direction toward a downstream direction of a gas flow (gas flow path) in a furnace, is used.

In the above-described reaction furnace for producing carbon black, the above-described gas flow path is preferably one in which the gas flows in a substantially one direction from an upstream side toward a downstream side.

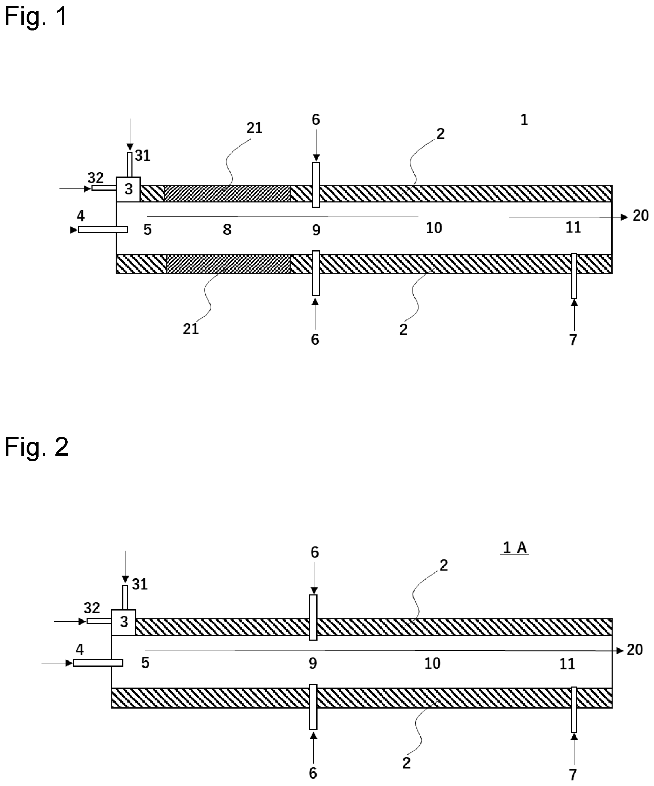

As an embodiment of such a reaction furnace for producing carbon black, for example, Figure 1 can schematically shows its cross-sectional shape. In the same Figure, in a reaction furnace for producing carbon black 1, a fuel combustion zone 3, a primary raw material introduction zone 5, a heating zone 8, and a secondary raw material introduction zone 9, which are in communication from an upstream direction toward a downstream direction of a gas flow path 20 formed in the furnace, are sequentially provided.

Hereinafter, the method for producing carbon black of the present invention will be described by appropriately using the reaction furnace for producing carbon black shown in Figure 1 as an example.

In the method for producing carbon black according to the present invention, oxygen-containing gas and fuel are introduced into the fuel combustion zone 3, and are mixed and combusted to generate a fuel combustion gas flow.

Examples of the above-described oxygen-containing gas can include gas formed of oxygen, air, or a mixture thereof. Examples of the above-described fuel can include one or more selected from hydrogen, carbon monoxide, petroleum-based liquid fuel such as FCC residual oil and heavy oil, coal-based liquid fuel such as creosote oil, hydrocarbon gases such as methane, ethane, propane, natural gas, petroleum gas, ethylene, and acetylene, mixture gases thereof, and gas generated by pyrolyzing rubber or plastics.

In the method for producing carbon black according to the present invention, when air is used as the oxygen-containing gas, an amount of air supplied is preferably 5 to 20 Nm³, more preferably 6 to 18 Nm³, and still more preferably 7 to 15 Nm³, relative to 1 kg of a total amount of the below-described primary raw material and secondary raw material supplied.

In the fuel combustion zone 3, by supplying fuel while oxygen-containing gas preheated to, for example, 400°C to 600°C is supplied, both the oxygen-containing gas and the fuel are mixed and combusted, which makes it possible to generate a high-temperature combustion gas flow.

In the reaction furnace for producing carbon black 1 shown in the embodiment of Figure 1, the fuel combustion zone 3 includes an oxygen-containing gas introduction port 31 configured to introduce oxygen-containing gas such as air, and a burner for combustion 32 configured to supply fuel. The oxygen-containing gas and the fuel are each introduced into the above-described fuel combustion zone 3, and are mixed and combusted, to generate a fuel combustion gas flow.

In the method for producing carbon black according to the present invention, a hydrocarbon that is a primary raw material is introduced into the primary raw material introduction zone 5 while the fuel combustion gas flow generated in the above-described fuel combustion zone 3 is introduced thereinto.

In the method for producing carbon black according to the present invention, examples of the hydrocarbon that is a primary raw material can include gas fuel (gaseous hydrocarbon) or fuel having a large molecular weight (hydrocarbon having a large molecular weight). Here, the gas fuel means that it is gaseous under the standard condition (25°C, 1 atm), and the fuel having a large molecular weight means one having a molecular weight of 70 or more as measured by the following GC-TOF/MS.

### (Measurement method of molecular weight)

The molecular weight is a value as measured by GC-TOF/MS using the following apparatus under the following condition.

### Measurement apparatus

JMS-T200GC available from JEOL Ltd.

### Measurement condition

Injection port temperature: 280°C
Carrier gas: Helium
Column: BPX-5
Ionization method: EI method
Ionization voltage: 70 eV
Ionization current: 300 µA

Examples of the above-described gas fuel can include, for example, one or more selected from hydrocarbon gases such as methane, ethane, propane, natural gas, petroleum gas, ethylene, and acetylene, mixture gases thereof, and gas generated by pyrolyzing rubber or plastics.

In addition, examples of the above-described fuel having a large molecular weight can include one or more selected from aromatic hydrocarbons such as benzene, toluene, xylene, naphthalene, and anthracene, coal-based hydrocarbons such as creosote oil, tar oil, and carboxylic acid oil, petroleum-based heavy oils such as ethylene heavy end oil and FCC residual oil, acetylene-based unsaturated hydrocarbons, ethylene-based hydrocarbons, aliphatic saturated hydrocarbons such as pentane and hexane, plant oils such as rapeseed oil and soybean oil, and oil generated by pyrolyzing rubber or plastics, and benzene, toluene, xylene, naphthalene, anthracene, creosote oil, carboxylic acid oil, ethylene heavy end oil, FCC residual oil, and the like are preferable from the viewpoint of appropriately preparing various characteristics of carbon black to be formed.

In the present invention, the primary raw material may be one obtained by mixing two or more kinds of the above-described hydrocarbons and the like.

In the present invention, the hydrocarbon that is a primary raw material preferably includes the above-described fuel having a large molecular weight. When the hydrocarbon that is a primary raw material includes fuel having a large molecular weight, a primary reaction product (carbon black nucleus) containing gas that is a precursor can be easily formed at pyrolysis.

In the method for producing carbon black according to the present invention, when air is used as the oxygen-containing gas, an amount of the primary raw material introduced in the primary raw material introduction zone 5 is preferably 0.01 to 5.00 kg, more preferably 0.02 to 4.90 kg, and still more preferably 0.03 to 4.80 kg, relative to 1 Nm³ of the above-described air under the standard condition (25°C, 1 atm).

In the reaction furnace for producing carbon black 1 shown in the embodiment of Figure 1, the primary raw material introduction zone 5 in communication with the fuel combustion zone 3 is provided, and the primary raw material is introduced from a primary raw material introduction nozzle 4 configured to supply the primary raw material in the furnace axis direction.

Examples of the above-described primary raw material introduction nozzle 4 can include, for example, a single fluid nozzle.

A primary raw material, which is a solid at normal temperature, is appropriately warmed to be a liquid or gaseous state, and the primary raw material is desirably introduced from the above-described primary raw material introduction nozzle 4.

In the method for producing carbon black according to the present invention, when a hydrocarbon that is a primary raw material is introduced into the primary raw material introduction zone 5 while the fuel combustion gas flow generated in the fuel combustion zone 3 is introduced thereinto, it is possible to form a primary reaction product-containing gas that contains a primary reaction product (carbon black nucleus) as a precursor, which is obtained by pyrolyzing a part of the hydrocarbon.

The above-described primary reaction product-containing gas formed is electrically heated in the heating zone 8. In the method for producing carbon black according to the present invention, examples of the electrically heating can include resistance heating, induction heating, and dielectric heating. Specific examples thereof include one or more that can be selected from heating with an electric heater, electromagnetic induction heating, and microwave heating.

In the method for producing carbon black according to the present invention, the heating temperature in the heating zone 8 is preferably 1000 to 2000°C, more preferably 1100 to 1900°C, and still more preferably 1200 to 1800°C.

In the method for producing carbon black according to the present invention, the heating time in the heating zone 8 can be appropriately adjusted so that the primary raw material introduced into the heating zone 8 is pyrolyzed to suitably form the primary reaction product (carbon black nucleus)-containing gas.

The heating time in the heating zone 8 can be controlled by adjusting a flow path length of the heating zone 8 (a length of a path through which the fuel combustion gas flow and the primary raw material flow in the heating zone 8) or flow velocities of the fuel combustion gas flow and the primary raw material in the heating zone 8.

In the reaction furnace for producing carbon black 1 shown in the embodiment of Figure 1, among furnace walls 2, a furnace wall 21 of the heating zone 8 is formed of a constitution material having a higher thermal conductivity than furnace walls of other zones, and the outer surface of the furnace wall 21 is heated, to conduct heat to a side of the inner surface of the furnace wall 21, which makes it possible to heat the inside of the furnace.

Examples of a means for heating the above-described furnace wall 21 can include an electric heater, electromagnetic induction heating, and microwave heating.

Alternatively, a primary reaction product itself introduced into the heating zone 8 can be heated by dielectric heating. Examples of a means for the dielectric heating can include microwave heating.

In the method for producing carbon black according to the present invention, while the fuel combustion gas flow is generated in the fuel combustion zone 3, the fuel combustion gas flow is electrically heated in the heating zone 8, carbon dioxide (CO₂) emissions are reduced and the hydrocarbon that is a primary raw material is suitably pyrolyzed, which makes it possible to form a primary reaction product (carbon black nucleus) having an appropriate particle diameter and to easily produce target carbon black while a structure is controlled in the secondary reaction that will be described later.

In the method for producing carbon black according to the present invention, when only the fuel combustion gas flow generated in the fuel combustion zone 3 is heated without performing electric heating in the heating zone 8, to produce carbon black (using a high-temperature fuel combustion gas), the obtained carbon black is micronized, and it is difficult to obtain carbon black having a desired nitrogen adsorption specific surface area (N₂SA).

In addition, in the method for producing carbon black according to the present invention, when the fuel combustion gas flow is not generated in the fuel combustion zone 3 and carbon black is produced only through electric heating in the heating zone 8, it is difficult to form carbon black.

According to the method for producing carbon black according to the present invention, using the reaction furnace for producing carbon black 1, in which the fuel combustion zone 3, the primary raw material introduction zone 5, the heating zone 8, and the secondary raw material introduction zone 9 are sequentially provided from an upstream direction toward a downstream direction of a gas flow path, the primary raw material is introduced into the above-described primary raw material introduction zone 5, and the formed primary reaction product-containing gas is electrically heated in the above-described heating zone 8, the primary reaction product (carbon black nucleus) containing gas can be suitably formed while carbon dioxide (CO₂) emissions are reduced.

In the method for producing carbon black according to the present invention, while the primary reaction product-containing gas formed in the above-described heating zone 8 is introduced into the secondary raw material introduction zone 9, the hydrocarbon that is a secondary raw material is introduced thereinto, to perform secondary reaction.

In the method for producing carbon black according to the present invention, examples of the hydrocarbon that is a secondary raw material can include gas fuel (gaseous hydrocarbon) or fuel having a large molecular weight (hydrocarbon having a large molecular weight). Here, the gas fuel means that it is gaseous under the standard condition (25°C, 1 atm), and the fuel having a large molecular weight means one having a molecular weight of 70 or more as measured by the GC-TOF/MS.

Examples of the above-described gas fuel can include, for example, one or more selected from hydrocarbon gases such as methane, ethane, propane, natural gas, petroleum gas, ethylene, and acetylene, mixture gases thereof, and gas generated by pyrolyzing rubber or plastics.

In addition, examples of the above-described fuel having a large molecular weight include one or more selected from aromatic hydrocarbons such as benzene, toluene, xylene, naphthalene, and anthracene, coal-based hydrocarbons such as creosote oil, tar oil, and carboxylic acid oil, petroleum-based heavy oils such as FCC residual oil and ethylene heavy end oil, hydrocarbons such as acetylene-based unsaturated hydrocarbons, ethylene-based hydrocarbons, aliphatic hydrocarbons such as pentane and hexane, plant oils such as rapeseed oil and soybean oil, and oil generated by pyrolyzing rubber or plastics.

In the method for producing carbon black according to the present invention, preferable examples of the secondary raw material include a gas fuel, particularly one or more hydrocarbon gases selected from methane, ethane, propane, natural gas, petroleum gas, ethylene, acetylene, and the like, in order to appropriately adjust various characteristics of carbon black to be formed.

In the method for producing carbon black according to the present invention, an amount of the secondary raw material introduced in the secondary raw material introduction zone 9 is preferably 0.10 to 5.00 times by mass, more preferably 0.15 to 4.95 times by mass, and even more preferably 0.20 to 4.90 times by mass, relative to an amount of the primary raw material introduced in the primary raw material introduction zone 5.

In the method for producing carbon black according to the present invention, when the amount of the secondary raw material introduced in the secondary raw material introduction zone 9 relative to the amount of the primary raw material introduced in the primary raw material introduction zone 5 falls within the above-described range, carbon black having desired characteristics can be easily produced.

In the method for producing carbon black according to the present invention, the secondary raw material is introduced into the secondary raw material introduction zone 9 while the primary reaction product-containing gas formed in the above-described heating zone 8 is introduced thereinto, and the secondary raw material is pyrolyzed while both primary reaction product-containing gas and the secondary raw material are allowed to flow in the furnace, to perform secondary reaction.

In the reaction furnace for producing carbon black 1 shown in the embodiment of Figure 1, the secondary raw material introduction zone 9 is coaxially provided in communication with the primary raw material introduction zone 5, and the secondary raw material is supplied from the secondary raw material introduction nozzle 6 configured to supply the secondary raw material from a direction perpendicular to the furnace axis direction in the secondary raw material introduction zone 9.

Examples of the above-described secondary raw material introduction nozzle 6 can include, for example, a single fluid nozzle.

A secondary raw material, which is a solid at normal temperature, is appropriately warmed to be a liquid or gaseous state, and the secondary raw material is introduced from the above-described secondary raw material introduction nozzle 6.

In the reaction furnace for producing carbon black 1 shown in the embodiment of Figure 1, the secondary raw material introduced into the secondary raw material introduction zone 9 is pyrolyzed while it is allowed to flow in the furnace axis direction in a reaction zone 10, to perform secondary reaction.

According to the method for producing carbon black according to the present invention, using the reaction furnace for producing carbon black in which the fuel combustion zone 3, the primary raw material introduction zone 5, the heating zone 8, and the secondary raw material introduction zone 9 are sequentially provided from an upstream direction toward a downstream direction of a gas flow path, when a hydrocarbon that is a secondary raw material is introduced while the primary reaction product (carbon black nucleus) containing gas obtained in the heating zone 8 is introduced into the above-described secondary raw material introduction zone 9, a pyrolyzed product of the secondary raw material grows particle diameters of primary reaction product (carbon black nucleus) particles to thereby form primary particles. The secondary reaction, in which an aggregate of a chain-like structure obtained by linking a plurality of the primary particles in the form of a rosary is formed, is performed, which makes it possible to easily produce carbon black having desired characteristics at a high yield.

In the method for producing carbon black according to the present invention, after target carbon black is formed, the reaction is appropriately stopped.

In the reaction furnace for producing carbon black 1 shown in the embodiment of Figure 1, a reaction stop zone 11 is also coaxially provided in communication with the reaction zone 10, the reaction stop zone 11 is provided with a cooling liquid introduction nozzle 7 in a direction perpendicular to the furnace axis direction, and the cooling liquid is sprayed from the cooling liquid introduction nozzle 7, which makes it possible to stop the reaction.

Examples of the above-described cooling liquid can include water. By spraying the cooling liquid, carbon black particles floated and suspended in a high-temperature combustion gas can be cooled.

The cooled carbon black particles pass via a flue and the like, and are separated and captured by a capturing system (separation and capturing apparatus) such as a cyclone or a bag filter. Then, target carbon black can be collected.

In the method for producing carbon black according to the present invention, the reaction furnace for producing carbon black is not particularly limited to the embodiment shown in Figure 1, and may have a variety of shapes.

The carbon black obtained by the production method according to the present invention has a dibutylphthalate (DBP) absorption amount of preferably 40 to 180 mL/100 g, more preferably 55 to 175 mL/100 g, and still more preferably 70 to 170 mL/100 g.

The above-described DBP absorption amount is an index that shows the degree of the structure development, that is, the degree of the complexity of the aggregate structure.

By allowing the dibutylphthalate (DBP) absorption amount of the carbon black obtained by the production method according to the present invention to fall within the above-described range, when it is blended into, for example, a rubber composition for tire treads, desired tensile stress or elongation can be suitably achieved.

In the specification of the present application, the DBP absorption amount means a value measured by the method specified in JIS K 6217-4 "Carbon black for rubber industry-Fundamental characteristics- Part 4: Determination of DBP absorption amount".

The carbon black obtained by the production method according to the present invention has a nitrogen adsorption specific surface area (N₂SA) of preferably 40 to 190 m²/g, more preferably 55 to 180 m²/g, and still more preferably 70 to 170 m²/g.

By allowing the N₂SA of the carbon black obtained by the production method according to the present invention to fall within the above-described range, when it is blended into a rubber composition for tire treads, desired tensile strength or wear resistance can be suitably achieved.

In the specification of the present application, the N₂SA means a value measured by the nitrogen adsorption amount by the method specified in JIS K 6217-2 2001 "Testing method of fundamental characteristics of carbon black for rubber industry".

The carbon black obtained by the production method according to the present invention has a toluene coloring transmittance (LT) of preferably 90% or more, more preferably 93% or more, and still more preferably 95% or more.

By allowing the toluene coloring transmittance (LT) of the carbon black obtained by the production method according to the present invention to fall within the above-described range, when the carbon black having a suppressed tar content, particularly an aromatic content on the surface is blended into the rubber composition for tire treads, desired wear resistance can be suitably achieved.

In the specification of the present application, the toluene coloring transmittance (LT) means a value measured by JIS K 6218 "Testing method of secondary characteristics of carbon black for rubber industry, 8 Toluene coloring transmittance, Method A".

In the method for producing carbon black according to the present invention, in the furnace method using the raw material hydrocarbon as the secondary raw material, it is possible to provide a method for producing carbon black which has desired characteristics at a high yield while carbon dioxide (CO₂) emissions are reduced.

Next, the reaction furnace for producing carbon black according to the present invention will be described.

The reaction furnace for producing carbon black according to the present invention is a reaction furnace for producing carbon black comprising a fuel combustion zone, a primary raw material introduction zone, a heating zone, and a secondary raw material introduction zone that are sequentially provided from an upstream direction toward a downstream direction of a gas flow path,
wherein the fuel combustion zone is a region where oxygen-containing gas and fuel are introduced, mixed, and combusted, to generate a fuel combustion gas flow,
the primary raw material introduction zone is a region where a hydrocarbon that is a primary raw material is introduced while the fuel combustion gas flow is introduced to form a primary reaction product-containing gas,
the heating zone is a region where the primary reaction product-containing gas is electrically heated, and
the secondary raw material introduction zone is a region where a hydrocarbon that is a secondary raw material is introduced while the primary reaction product-containing gas electrically heated is introduced, to perform secondary reaction.

Details of the reaction furnace for producing carbon black according to the present invention are as described in the description of the method for producing carbon black according to the present invention. Specific examples thereof can include the above-described reaction furnace for producing carbon black 1.

The reaction furnace for producing carbon black according to the present invention can be suitably used in the method for producing carbon black according to the present invention.

According to the present invention, the raw material hydrocarbon is used as the secondary raw material in the furnace method, and it is possible to provide a reaction furnace for producing carbon black that can produce carbon black having desired characteristics at a high yield while carbon dioxide (CO₂) emissions are reduced.

Next, the present invention will be described in more detail by way of Examples, but this is merely illustrative and does not limit the present invention.

### Examples

### (Example 1 to Example 9)

The reaction furnace for producing carbon black 1 having a substantially cylindrical shape as shown in the cross-sectional view of Figure 1 was used to produce carbon black.

In the reaction furnace shown in Figure 1, the fuel combustion zone 3, the primary raw material introduction zone 5, the heating zone 8, the secondary raw material introduction zone 9, the reaction zone 10, and the reaction stop zone 11, which are in communication from an upstream direction toward a downstream direction of the gas flow path 20 formed in a furnace, are sequentially provided.

In the reaction furnace for producing carbon black 1 shown in Figure 1, the fuel combustion zone 3 includes the oxygen-containing gas introduction port 31 configured to introduce oxygen-containing gas such as air and the burner for combustion 32 configured to supply fuel.

Moreover, the primary raw material introduction zone 5 include a single fluid nozzle, which is the primary raw material introduction nozzle 4 configured to supply the primary raw material in the furnace axis direction, and is provided in communication with the fuel combustion zone 3.

The heating zone 8 includes the furnace wall 21 formed of a constitution material having a higher thermal conductivity compared to the furnace wall 2 of another part and has such a configuration that the inside of the furnace is heated by electrically heating the outer surface of this furnace wall 21 and conducting heat to a side of the inner surface of the furnace wall 21.

The secondary raw material introduction zone 9 includes a single fluid nozzle, which is the secondary raw material introduction nozzle 6, from a direction perpendicular to the furnace axis direction, and is coaxially provided in communication with the heating zone 8. Furthermore, the reaction zone 10 is coaxially provided in communication with the secondary raw material introduction zone 9. Moreover, the reaction stop zone 11 includes the cooling liquid introduction nozzle 7 (water cooling quench), which is configured to supply cooling liquid from a direction perpendicular to the furnace axis direction and can change its position in the vertical direction of the figure, and is coaxially provided in communication with the reaction zone 10.

In Example 1 to Example 9, the reaction furnace for producing carbon black 1 was used to produce each carbon black as described below.

First, in the fuel combustion zone 3, air (ratio of oxygen contained: 21 % by volume) preheated to 500°C was supplied from the oxygen-containing gas introduction port 31 so that each supply amount shown in Table 1 was satisfied. Then, city gas (gas type 13A) as fuel was jetted and supplied from the burner for combustion 32 so that each supply amount shown in Table 1 was satisfied, followed by mixing and combusting, to thereby form a high-temperature combustion gas flow flowing in the furnace.

While the above-described high-temperature combustion gas flow was introduced into the primary raw material introduction zone 5, naphthalene (molecular weight: 128) as the primary raw material was supplied from a single fluid nozzle as the primary raw material introduction nozzle 4 so that each supply amount shown in Table 1 was satisfied, and then the above-described high-temperature combustion gas flow and the primary raw material were introduced into the heating zone 8.

In the heating zone 8, by electrically heating the outer surface of the furnace wall 21 to a range of 1200 to 1400°C using an electric heater, the inside of the furnace was heated at each temperature of electric heating shown Table 1, to sufficiently form primary reaction product-containing gas.

Next, while the primary reaction product-containing gas was introduced into the secondary raw material introduction zone 9, city gas (gas type: 13A) as the secondary raw material was supplied from the secondary raw material introduction nozzle 6 so that each supply amount shown in Table 1 was satisfied, and the secondary reaction was sufficiently performed in the reaction zone 10. Then, it was introduced into the reaction stop zone 11, and cooling water was sprayed from the cooling liquid introduction nozzle 7. The cooled carbon black particles flowed via a flue and were captured by a separation and capturing apparatus not illustrated, to thereby collect target carbon black.

The rates (% by volume (vol%)) of H₂ gas, CO₂ gas, and CO gas contained in the furnace after the secondary reaction were each determined from the partial pressure of the furnace gas downstream of the above-described reaction zone 10 (the part just before the reaction stop zone 11). The results are shown in Table 1.

The nitrogen adsorption specific surface area N₂SA (m²/g), the dibutylphthalate (DBP) absorption amount (mL/100 g), and the toluene coloring transmittance LT (%) of the respective carbon blacks obtained were also measured. The results are shown in Table 2.

Moreover, the formed amount (kg) of each carbon black (CB) and the CO₂ generated amount (m³) were determined, and CO₂ generated amount / CB formed amount (m³/kg) was each calculated.

The results are shown in Table 2.

### (Comparative Example 1 to Comparative Example 10)

A reaction furnace for producing carbon black 1A having a substantially cylindrical shape as shown in the cross-sectional view of Figure 2 was used to produce carbon black.

The reaction furnace for producing carbon black 1A shown in Figure 2 has the same structure, furnace size, and the like as the reaction furnace for producing carbon black 1 shown in Figure 1 except that it does not include the furnace wall 21 formed of a constitution material having a higher thermal conductivity, and free from the heating zone 8.

Regarding the respective parts of the reaction furnace for producing carbon black 1A shown in Figure 2, the same zones and members as those of the reaction furnace for producing carbon black 1 shown in Figure 1 are designated by the same reference numerals as those of the reaction furnace for producing carbon black 1 shown in Figure 1.

In Comparative Example 1 to Comparative Example 10, the reaction furnace for producing carbon black 1A was used to produce each carbon black in the following manner.

First, in the fuel combustion zone 3, air (ratio of oxygen contained: 21 % by volume) preheated to 500°C was supplied from the oxygen-containing gas introduction port 31 so that each supply amount shown in Table 3 was satisfied. Then, city gas (gas type 13A) as fuel was jetted and supplied from the burner for combustion 32 so that each supply amount shown in Table 3 was satisfied, followed by mixing and combusting, to thereby form a high-temperature combustion gas flow flowing in the furnace.

While the above-described high-temperature combustion gas flow was introduced into the primary raw material introduction zone 5, naphthalene (molecular weight: 128) as the primary raw material was supplied from a single fluid nozzle as the primary raw material introduction nozzle 4 so that each supply amount shown in Table 3 was satisfied.

Note that, in Comparative Example 1, the amount of the primary raw material supplied was 0 kg/h (the primary raw material was not supplied).

Next, while the primary reaction product-containing gas was introduced into the secondary raw material introduction zone 9, city gas (gas type: 13A) as the secondary raw material was supplied from the secondary raw material introduction nozzle 6 so that each supply amount shown in Table 3 was satisfied, and the secondary reaction was sufficiently performed in the reaction zone 10. Then, it was introduced into the reaction stop zone 11, and cooling water was sprayed from the cooling liquid introduction nozzle 7. The cooled carbon black particles flowed via a flue and were captured by a separation and capturing apparatus not illustrated, to thereby collect target carbon black.

Note that, in Comparative Example 1, carbon black was not obtained.

The rates (% by volume (vol%)) of H₂ gas, CO₂ gas, and CO gas contained in the furnace after the secondary reaction were each determined from the partial pressure of the furnace gas downstream of the above-described reaction zone 10 (the part just before the reaction stop zone 11). The results are shown in Table 3.

The nitrogen adsorption specific surface area N₂SA (m²/g), the dibutylphthalate (DBP) absorption amount (mL/100 g), and the toluene coloring transmittance LT (%) of the respective carbon blacks obtained were also measured. The results are shown in Table 4.

Moreover, the formed amount (kg) of each carbon black (CB) and the CO₂ generated amount (m³) were determined, and CO₂ generated amount / CB formed amount (m³/kg) was each calculated.

The results are shown in Table 4.

**[Table 1]**

| | Production condition (each supply amount) | | | | Temperature of electrically heating (°C) | Ratio of gas contained in furnace after secondary reaction | | |
|---|---|---|---|---|---|---|---|---|
| | Air (Nm³/h) | Fuel (Nm³/h) | Primary raw material (kg/h) | Secondary raw material (Nm³/h) | | H₂ (vol%) | CO₂ (vol%) | CO (vol%) |
| Example 1 | 220 | 16 | 20 | 8 | 1340 | 13.2 | 5.5 | 9.1 |
| Example 2 | 220 | 16 | 20 | 11 | 1350 | 14.9 | 5.8 | 8.3 |
| Example 3 | 220 | 16 | 20 | 15 | 1390 | 15.0 | 5.8 | 7.0 |
| Example 4 | 220 | 16 | 15 | 18 | 1300 | 17.6 | 5.7 | 8.3 |
| Example 5 | 220 | 16 | 15 | 20 | 1310 | 16.9 | 6.1 | 6.4 |
| Example 6 | 220 | 16 | 10 | 20 | 1280 | 18.1 | 6.0 | 7.2 |
| Example 7 | 220 | 16 | 10 | 23 | 1290 | 18.8 | 6.3 | 5.1 |
| Example 8 | 220 | 16 | 7 | 21 | 1200 | 17.1 | 5.1 | 8.4 |
| Example 9 | 220 | 16 | 7 | 30 | 1310 | 21.5 | 6.3 | 4.8 |

**[Table 2]**

| | Characteristics of carbon black | | | CO₂ emissions |
|---|---|---|---|---|
| | N₂SA (m²/g) | DBP absorption amount (mL/100g) | LT (%) | CO₂ generated amount/CB formed amount (m³/kg) |
| Example 1 | 115 | 105 | 98 | 1.42 |
| Example 2 | 60 | 161 | 98 | 0.95 |
| Example 3 | 41 | 180 | 97 | 0.76 |
| Example 4 | 96 | 133 | 99 | 1.20 |
| Example 5 | 52 | 178 | 98 | 0.86 |
| Example 6 | 159 | 76 | 99 | 1.37 |
| Example 7 | 130 | 92 | 97 | 1.11 |
| Example 8 | 190 | 45 | 98 | 1.43 |
| Example 9 | 151 | 151 | 96 | 0.99 |

**[Table 3]**

| | Production condition (each supply amount) | | | | Ratio of gas contained in furnace after secondary reaction | | |
|---|---|---|---|---|---|---|---|
| | Air (Nm³/h) | Fuel (Nm³/h) | Primary raw material (kg/h) | Secondary raw material (Nm³/h) | H₂ (vol%) | CO₂ (vol%) | CO (vol%) |
| Comparative Example 1 | 220 | 16 | 0 | 20 | 7.0 | 7.9 | 9.1 |
| Comparative Example 2 | 220 | 16 | 20 | 4 | 10.1 | 7.0 | 9.4 |
| Comparative Example 3 | 220 | 16 | 20 | 6 | 11.5 | 6.8 | 8.6 |
| Comparative Example 4 | 220 | 16 | 20 | 8 | 10.6 | 6.9 | 7.4 |
| Comparative Example 5 | 220 | 16 | 15 | 9 | 11.3 | 6.9 | 8.9 |
| Comparative Example 6 | 220 | 16 | 15 | 11 | 11.3 | 7.3 | 6.8 |
| Comparative Example 7 | 220 | 16 | 10 | 9 | 10.6 | 7.3 | 7.9 |
| Comparative Example 8 | 220 | 16 | 10 | 11 | 10.9 | 7.7 | 5.6 |
| Comparative Example 9 | 220 | 16 | 7 | 11 | 10.3 | 6.8 | 9.1 |
| Comparative Example 10 | 220 | 16 | 7 | 16 | 12.9 | 7.7 | 5.3 |

**[Table 4]**

| | Characteristics of carbon black | | | CO₂ emissions |
|---|---|---|---|---|
| | N₂SA (m²/g) | DBP absorption amount (mL/100g) | LT (%) | CO₂ generated amount/CB formed amount (m³/kg) |
| Comparative Example 1 | - | - | - | - |
| Comparative Example 2 | 113 | 112 | 43 | 2.64 |
| Comparative Example 3 | 66 | 156 | 8 | 1.69 |
| Comparative Example 4 | 43 | 172 | 1 | 1.59 |
| Comparative Example 5 | 95 | 125 | 5 | 2.28 |
| Comparative Example 6 | 56 | 169 | 2 | 1.55 |
| Comparative Example 7 | 156 | 72 | 7 | 3.20 |
| Comparative Example 8 | 125 | 85 | 4 | 2.73 |
| Comparative Example 9 | 180 | 50 | 10 | 4.03 |
| Comparative Example 10 | 80 | 140 | 3 | 2.33 |

In Example 1 to Example 9, carbon black were produced using the reaction furnace for producing carbon black 1 comprising the fuel combustion zone 3, the primary raw material introduction zone 5, the heating zone 8, and the secondary raw material introduction zone 9 that were sequentially provided from an upstream direction toward a downstream direction of the gas flow path 20 as follows : Oxygen-containing gas and fuel were introduced into the above-described fuel combustion zone 3, and were mixed and combusted to generate a fuel combustion gas flow. Next, while the above-described fuel combustion gas flow was introduced into the above-described primary raw material introduction zone 5, the primary raw material was introduced thereinto, to form a primary reaction product-containing gas. Then, in the above-described heating zone 8, the primary reaction product-containing gas was electrically heated. Then, in the above-described secondary raw material introduction zone 9, while the above-described primary reaction product-containing gas was introduced, the secondary raw material was introduced to perform the secondary reaction.

Therefore, Table 1 and Table 2 indicate that Example 1 to Example 9 can produce carbon black having a low CO₂ generated amount per carbon black (CB) formed amount (CO₂ generated amount / CB formed amount) of 0.76 to 1.43 m³/kg while reducing carbon dioxide (CO₂) emissions, in the furnace method using the raw material hydrocarbon as the secondary raw material.

In addition, Table 1 indicates that Example 1 to Example 9 can produce carbon black at a high yield with a high H₂ generated amount of 13.2 to 21.5 % by volume (vol%) after the secondary reaction by pyrolyzing the primary raw material and the secondary raw material effectively.

Moreover, Table 2 indicates that Example 1 to Example 9 can produce carbon black having excellent characteristics such as the nitrogen adsorption specific surface area N₂SA of 41 to 190 m²/g, the dibutylphthalate (DBP) absorption amount of 45 to 180 mL/100 g, and the toluene coloring transmittance LT of 96 to 99%.

On the other hand, Table 3 and Table 4 indicate that Comparative Example 1 fails to produce carbon black since the primary raw material is not supplied in the primary raw material introduction zone 5 and electric heating is not performed in the heating zone 8, in comparison with Example 1 to Example 9.

Moreover, Table 4 indicates that Comparative Example 2 to Comparative Example 10 produce carbon black having high CO₂ generated amount per carbon black (CB) formed amount (CO₂ generated amount / CB formed amount) and fail to reduce carbon dioxide (CO₂) emissions during production of carbon black of the carbon dioxide (CO₂), since the electric heating is not performed in the heating zone, in comparison with Example 1 to Example 9.

Table 3 indicates that Comparative Example 2 to Comparative Example 10 give lower yield of carbon black along with low pyrolytic properties of the primary raw material and the secondary raw material as well as low H₂ generated amount after the secondary reaction, since the electric heating is not performed in the heating zone, in comparison with Example 1 to Example 9.

Table 4 indicates that Comparative Example 2 to Comparative Example 10 produce only carbon blacks having low toluene coloring transmittances LT of 1 to 43%, since the electric heating is not performed in the heating zone, in comparison with Example 1 to Example 9.

### Industrial Applicability

The present invention can provide a method that can reduce carbon dioxide (C O₂) emissions and that can produce carbon black having desirable characteristics at a high yield in the furnace method using the raw material hydrocarbon as the secondary raw material, and a reaction furnace for producing carbon black that can be suitably used in the above-described method.

### Reference Signs List

1, 1A reaction furnace for producing carbon black
2 furnace wall
21 furnace wall of heating zone
3 fuel combustion zone
31 oxygen-containing gas introduction port
32 burner for combustion
4 primary raw material introduction nozzle
5 primary raw material introduction zone
6 secondary raw material introduction nozzle
7 cooling liquid introduction nozzle
8 heating zone
9 secondary raw material introduction zone
10 reaction zone
11 reaction stop zone
20 gas flow path

## Claims

1. A method for producing carbon black using a reaction furnace for producing carbon black comprising a fuel combustion zone, a primary raw material introduction zone, a heating zone, and a secondary raw material introduction zone that are sequentially provided from an upstream direction toward a downstream direction of a gas flow path, the method comprising:
introducing oxygen-containing gas and fuel into the fuel combustion zone, mixing and combusting the oxygen-containing gas and the fuel to generate a fuel combustion gas flow, introducing a hydrocarbon that is a primary raw material while the fuel combustion gas flow is introduced into the primary raw material introduction zone to form a primary reaction product-containing gas, and electrically heating the primary reaction product-containing gas in the heating zone; and
introducing a hydrocarbon that is a secondary raw material while the primary reaction product-containing gas electrically heated is introduced into the secondary raw material introduction zone, to perform secondary reaction.

2. The method for producing carbon black according to claim 1, wherein carbon black having a dibutylphthalate (DBP) absorption amount of 40 to 180 mL/100 g, a nitrogen adsorption specific surface area (N₂SA) of 40 to 190 m²/g, and a toluene coloring transmittance (LT) of 90% or more is obtained.

3. A reaction furnace for producing carbon black comprising a fuel combustion zone, a primary raw material introduction zone, a heating zone, and a secondary raw material introduction zone that are sequentially provided from an upstream direction toward a downstream direction of a gas flow path,
wherein the fuel combustion zone is a region where oxygen-containing gas and fuel are introduced, mixed, and combusted, to generate a fuel combustion gas flow,
the primary raw material introduction zone is a region where a hydrocarbon that is a primary raw material is introduced while the fuel combustion gas flow is introduced to form a primary reaction product-containing gas,
the heating zone is a region where the primary reaction product-containing gas is electrically heated, and
the secondary raw material introduction zone is a region where a hydrocarbon that is a secondary raw material is introduced while the primary reaction product-containing gas is introduced, to perform secondary reaction.
